# EUROPEAN PATENT APPLICATION

(11) **EP 4 769 902 A1**
(43) Date of publication of application: **01.07.2026**
(21) Application number: 25220299.9
(22) Date of filing: 03.12.2025
(51) Int. Cl.: H02K 1/16, H02K 3/30, H02K 3/34, H02K 15/0421, H02K 15/106, H02K 15/108

(54) **STATOR AND METHOD OF ASSEMBLING STATOR**

(30) Priority: 27.12.2024 JP 2024232188
(71) Applicant: Toyota Jidosha Kabushiki Kaisha, Toyota-shi, Aichi-ken 471-8571 (JP)
(72) Inventor: WATANABE, Kohei, TOYOTA-SHI, AICHI-KEN 471-8571 (JP); URANO, Hiroaki, TOYOTA-SHI, AICHI-KEN 471-8571 (JP); DEGUCHI, Junichi, TOYOTA-SHI, AICHI-KEN 471-8571 (JP); KAWAKAMI, Jun, TOYOTA-SHI, AICHI-KEN 471-8571 (JP); NAGASAWA, Naohiro, TOYOTA-SHI, AICHI-KEN 471-8571 (JP); TANAKA, Yuki, TOYOTA-SHI, AICHI-KEN 471-8571 (JP); USHIDA, Norihiro, TOYOTA-SHI, AICHI-KEN 471-8571 (JP)
(74) Representative: Cabinet Beau de Loménie

(57) **Abstract**

A stator (10) includes: a stator core (11) with a slot (14); a coil (12) attached to the stator core (11) with a part of the coil inserted into the slot (14); and insulating paper (30). An opening of the slot (14) in an end surface of the stator core (11) that faces an axial direction includes an expanded portion (18a) whose width is increased in a direction in which a coil end portion of the coil (12) that protrudes from the end surface is bent. The insulating paper (30) is inserted into the slot (14) to insulate the stator core (11) from the coil (12), and accommodated in the expanded portion (18a) with a part of the accommodated insulating paper overlapping twice or more.

## Description

### BACKGROUND OF THE INVENTION

### 1. Field of the Invention

The present disclosure relates to a stator and a method of assembling a stator.

### 2. Description of Related Art

Japanese Unexamined Patent Application Publication No. 2022-70482 (JP 2022-70482 A) discloses insulating paper to be inserted into a slot formed in a stator core that constitutes a motor. The insulating paper insulates the stator core from a coil inserted into the slot. According to JP 2022-70482 A, the insulating paper includes a non-protruding portion to be accommodated inside the slot and a protruding portion that protrudes from an end portion of the slot in the axial direction of the stator core.

### SUMMARY OF THE INVENTION

According to JP 2022-70482 A, even when a bending stress of the coil acts on the protruding portion of the insulating paper as the coil is bent during processing of the coil, the stress is alleviated by a stress alleviation portion of the protruding portion, and damage to the protruding portion is suppressed. With JP 2022-70482 A, however, it is not possible to reduce the stress acting on the stator core as the coil is bent. Application of a strong stress to the stator core may lead to partial damage to the stator core or an energy loss in the motor.

A first aspect of the present disclosure provides a stator including: a stator core with a slot; a coil attached to the stator core with a part of the coil put into the slot; and insulating paper. An opening of the slot in an end surface of the stator core that faces the axial direction includes an expanded portion whose width is increased in a direction in which a coil end portion of the coil that protrudes from the end surface is bent. The insulating paper is put into the slot to insulate the stator core from the coil, and accommodated in the expanded portion with a part of the accommodated insulating paper overlapping twice or more.

With the stator of the first aspect of the present disclosure, the stress acting on the stator core due to the bending of the coil end portion is reduced by the insulating paper accommodated in the expanded portion in a state of overlapping twice or more.

In the stator of the first aspect of the present disclosure, an end portion of the insulating paper may be accommodated in the expanded portion with the accommodated end portion folded.

In the stator of the first aspect of the present disclosure, the coil may be a plurality of segment coils that is connected to each other;. The slot may be provided to extend in a radial direction of the stator core. A predetermined number of segment coils may be put into the slot as arranged along the radial direction. The coil end portion of each of the segment coils may be bent in a direction that intersects the radial direction.

In the stator of the first aspect of the present disclosure, the expanded portion may be provided continuously within a range in which the predetermined number of segment coils are arranged.

In the stator of the first aspect of the present disclosure, the expanded portion may be provided in a one-to-one correspondence with each of the segment coils and spaced apart from each other within a range in which the predetermined number of segment coils are arranged.

A second aspect of the present disclosure provides a method of assembling a stator, including: putting insulating paper into a slot provided in a stator core; putting a part of a coil into the slot and inside the insulating paper; and bending a coil end portion of the coil protruding from the end surface. The slot includes an opening in an end surface of the stator core that faces an axial direction. The opening includes an expanded portion whose width is increased in a first direction. The insulating paper is accommodated in the expanded portion with a part of the accommodated insulating paper overlapping twice or more. The first direction is a direction in which the coil end portion is bent.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view schematically illustrating the structure of a stator;
FIG. 2 schematically illustrates an outline of a method of assembling the stator;
FIG. 3 is a flowchart illustrating the method of assembling the stator;
FIG. 4 is a perspective view illustrating a part of the stator from the side of a second end surface;
FIG. 5 illustrates one slot viewed from a viewpoint that faces the second end surface;
FIG. 6 illustrates a cross section taken along the line VI-VI in FIG. 5;
FIG. 7 illustrates one slot according to an example different from that of FIG. 5, viewed from a viewpoint that faces the second end surface; and
FIG. 8 illustrates a cross section taken along the line VIII-VIII in FIG. 7.

### DETAILED DESCRIPTION OF EMBODIMENTS

The main features of the embodiment described below are listed. These features can be combined in any way.

In the stator according to the first aspect of the present disclosure, the insulating paper may be accommodated in the expanded portion with an end portion of the insulating paper folded.

According to the stator of the first aspect of the present disclosure, the insulating paper can be accommodated in the expanded portion with a part of the insulating paper overlapping twice or more by simply bending the end portion of the insulating paper.

In the stator according to the first aspect of the present disclosure, the coil may be constituted by connecting a plurality of segment coils; the slot may be provided to extend in a radial direction of the stator core; a predetermined number of segment coils may be put into the slot as arranged along the radial direction; and the coil end portion of each of the segment coils may be bent in a direction that intersects the radial direction.

According to the stator of the first aspect of the present disclosure, the stress acting on the stator core when bending the coil end portion of each of the segment coils can be reduced by the insulating paper accommodated in the expanded portion in a state of overlapping twice or more.

In the stator according to the first aspect of the present disclosure, the expanded portion may be provided continuously within a range in which the predetermined number of segment coils are arranged.

According to the stator of the first aspect of the present disclosure, it is easy to form the opening provided with the expanded portion.

In the stator according to the first aspect of the present disclosure, the expanded portion may be provided in a one-to-one correspondence with each of the segment coils and spaced apart from each other within a range in which the predetermined number of segment coils are arranged.

According to the stator of the first aspect of the present disclosure, the amount by which the stator core is cut out by forming the expanded portion can be minimized.

The present embodiment will be described with reference to the drawings. The drawings are merely exemplary, and the present embodiment is not limited to the contents illustrated in the drawings. Also, since the drawings are exemplary, some parts may be omitted.

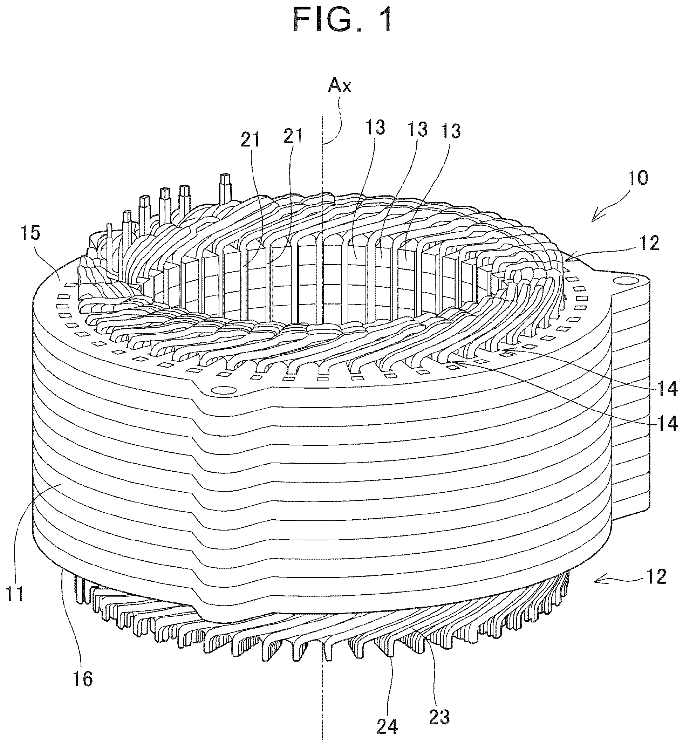

FIG. 1 is a perspective view schematically illustrating the structure of a stator 10. The stator 10 generally includes a stator core 11 and a coil 12. The stator 10 is a component of a motor that is driven by electric power. The concept of a motor includes various motors such as a direct-current (DC) motor, an alternating-current (AC) motor, a stepping motor, and a servo motor.

The specific configuration and material of the stator core 11 are not particularly limited. For example, the stator core 11 is substantially cylindrical and is made by stacking a plurality of silicon steel plates. Hereinafter, the radial direction of the stator core 11, the circumferential direction of the stator core 11, and the axial direction of the stator core 11 will be simply referred to as the radial direction, the circumferential direction, and the axial direction, respectively. The axial direction is a direction parallel to a central axis Ax of the stator core 11. The radial direction is a direction that perpendicularly intersects the central axis Ax and extends radially from the central axis Ax. In the radial direction, the side closer to the central axis Ax is the radially inner side, and the side farther from the central axis Ax is the radially outer side.

A plurality of tooth portions 13 is provided at the inner periphery of the stator core 11 so as to protrude toward the radially inner side. The tooth portions 13 are arranged along the circumferential direction. Each gap between adjacent tooth portions 13 in the circumferential direction is called a slot 14. A plurality of slots 14 formed in the stator core 11 is open to the inner peripheral surface of the stator core 11 and both end surfaces that face the axial direction. One end surface of the stator core 11 that faces the axial direction is called a first end surface 15, and the other end surface of the stator core 11 that faces the axial direction is called a second end surface 16.

The coil 12 is attached to the stator core 11 with a part of the coil 12 inserted into each slot 14 of the stator core 11. It can also be said that the coil 12 is wound around the tooth portions 13 and extends along the circumferential direction. The coil 12 corresponds to, for example, coils for three phases corresponding to a three-phase AC voltage, that is, three coils corresponding to the U-phase, V-phase, and W-phase. Electric power is supplied to the coil 12 from an inverter (not illustrated) outside the stator 10.

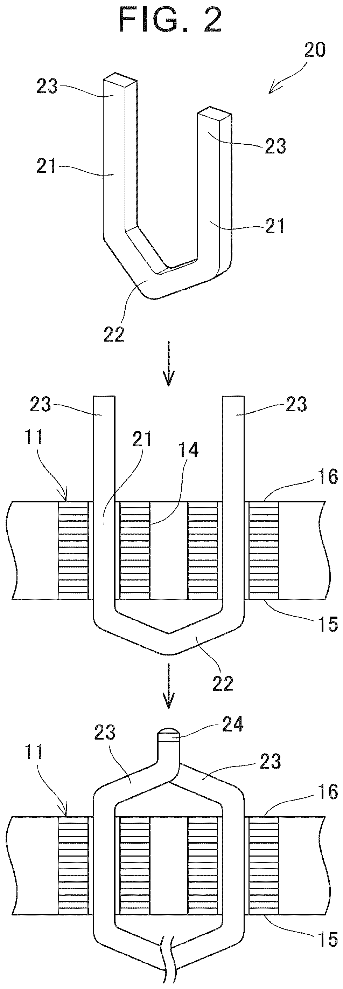

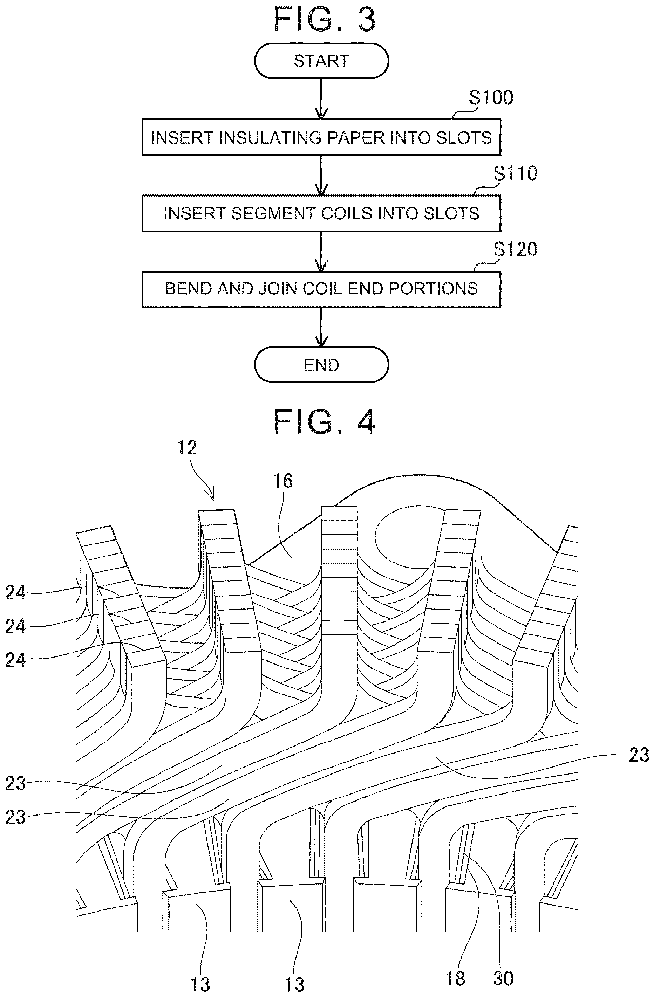

FIG. 2 schematically illustrates an outline of a method of assembling the stator 10. FIG. 3 is a flowchart illustrating the method of assembling the stator 10. In the upper part of FIG. 2, a segment coil 20 as a unit constituting the coil 12 is schematically illustrated. The segment coil 20 is substantially U-shaped and includes two lead portions 21 and a curved portion 22 that connects the two lead portions 21. The lead portions 21 may be called straight portions, for example. The curved portion 22 may be called an anti-lead portion, for example. The segment coil 20 is formed, for example, by bending a rectangular conductor having a rectangular cross section. Although not illustrated in FIG. 2, a crank portion may be formed near the center, for example, of the curved portion 22 in order to change lanes between one lead portion 21 and the other lead portion 21. Reference numeral 23 denotes a coil end portion 23 as the distal end-side portion of each lead portion 21.

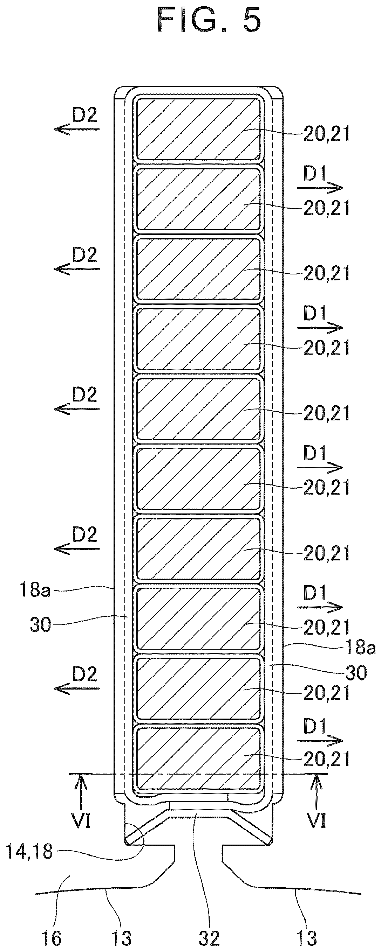

In step S100, insulating paper is inserted into the stator core 11. That is, the insulating paper 30 (see FIG. 5, etc.) is inserted into the slot 14 of the stator core 11. The insulating paper 30 is inserted to insulate the stator core 11 from the coil 12. The insulating paper 30 is a sheet-like insulating material that is insulating and flexible. The insulating paper 30 is also called a multi-layer laminate material, for example. The method of inserting the insulating paper 30 into the slot 14 is not particularly limited. The insulating paper 30 is inserted into the slot 14 through the opening of the slot 14 formed in the first end surface 15 or an opening 18 of the slot 14 formed in the second end surface 16, for example. Alternatively, the insulating paper 30 may be inserted into the slot 14 from the inner peripheral surface side of the stator core 11. Step S100 corresponds to an example of an "insulating paper insertion step".

In step S110, the segment coil 20 is inserted into the slot 14 of the stator core 11 and inside the insulating paper 30. In the middle and lower parts of FIG. 2, a part of the stator core 11 is illustrated from the inner peripheral surface side. As illustrated in the middle part of FIG. 2, the lead portion 21 of the segment coil 20, as a part of the coil 12, is inserted into the slot 14 from the side of the first end surface 15 of the stator core 11. The two lead portions 21 of one segment coil 20 are inserted into different slots 14. As a result, the segment coil 20 is in a state in which the curved portion 22 protrudes from the first end surface 15 and coil end portions 23 protrude from the second end surface 16. In FIG. 2, the insulating paper 30 is not illustrated. Step S110 corresponds to an example of a "coil insertion step".

In step S120, the coil end portion 23 protruding from the second end surface 16 of the stator core 11 is bent and joined. The concept of bending may be understood to include the process of twisting an object. The coil end portion 23, which was straight when inserted from the side of the first end surface 15 and protruded from the second end surface 16, is bent or twisted appropriately in the circumferential direction or the radial direction, and is joined to the coil end portion 23 of another segment coil 20 by welding or the like, as illustrated in the lower part of FIG. 2. Step S120 corresponds to an example of a "folding step".

The portion where coil end portions 23 of different segment coils 20 are joined together is called a joint portion 24. A plurality of segment coils 20 inserted into the stator core 11 is joined together at the coil end portions 23 to form a continuous coil 12 (for example, a coil 12 corresponding to the U-phase). That is, the coil 12 is constituted by connecting the segment coils 20.

FIG. 4 is a perspective view illustrating a part of the stator 10 from the side of the second end surface 16. In FIG. 4, a plurality of joint portions 24 at which the bent coil end portions 23 are joined together is illustrated. In step S110, the segment coils 20 are inserted into the slots 14 of the stator core 11 from the side of the first end surface 15, with the segment coils 20 aligned in a circular shape by a known circular alignment method, for example. Regarding how to connect the segment coils 20, such as the positional relationship between the coil end portions 23 to be connected together on the side of the second end surface 16, various connection patterns have been proposed, and therefore will not be specifically mentioned in the present embodiment. The method of assembling the stator 10 may further include one or more steps not indicated in FIG. 3.

FIG. 5 illustrates one slot 14 and the insulating paper 30 and the segment coils 20 inserted into the slot 14, from a viewpoint that faces the second end surface 16 of the stator core 11. The opening 18 of the slot 14 is formed in the second end surface 16. The slot 14 extends toward the radially outer side from the inner peripheral surface of the stator core 11. That is, the slot 14 is formed to extend in the radial direction. A predetermined number (ten in FIG. 5) of segment coils 20 are inserted into the slot 14 as arranged along the radial direction. In FIG. 5, the cross section of each of the segment coils 20 inserted into the slot 14 is illustrated. The cross section of each of the segment coils 20 may be understood as the cross section of each lead portion 21 of each segment coil 20. In the drawing, the segment coils 20 that appear to be adjacent to each other are insulated from each other except for the joint portions 24.

As illustrated in FIG. 5, the insulating paper 30 is accommodated in the slot 14 so as to collectively surround the predetermined number of segment coils 20. FIG. 4 also illustrates the opening 18 of the slot 14 and the insulating paper 30 in a simplified manner. In the example in FIG. 5, wedge paper 32 is inserted into the slot 14 at the innermost position in the radial direction. The wedge paper 32 is held in place by stretching against projecting portions provided at the distal ends of the tooth portions 13 on both sides of the slot 14 so as to protrude toward the slot 14. The wedge paper 32 has the function of holding down the distal end of the folded insulating paper 30 and acts as a spacer to reduce gaps within the slot 14.

In FIG. 5, directions (bending directions) D1 and D2 in which the coil end portions 23 are bent in step S120 are indicated for each of the segment coils 20 aligned in the radial direction within the slot 14. The bending direction D1 and the bending direction D2 are both directions that intersect the radial direction and are opposite to each other. Moreover, it can be said that both the bending direction D1 and the bending direction D2 are substantially along the circumferential direction. As illustrated in FIG. 5, the coil end portions 23 of the segment coils 20 arranged in the radial direction within the slot 14 are bent alternately in the bending directions D1 and D2.

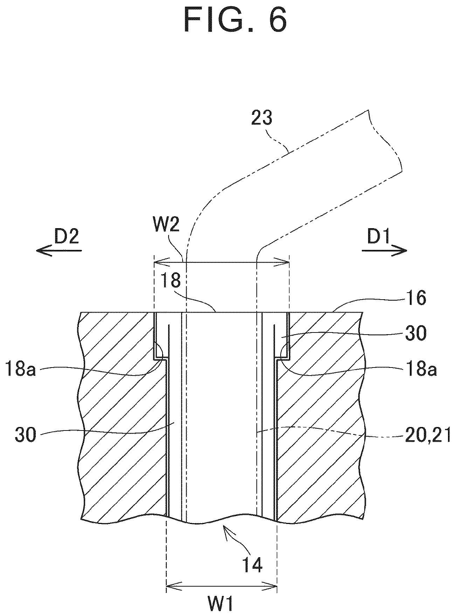

FIG. 6 illustrates a cross section taken along the line VI-VI in FIG. 5. In FIG. 6, however, the cross section of the insulating paper 30 is not hatched for ease of viewing. The segment coil 20 inserted into the slot 14 is indicated by the long dashed double-short dashed line. As illustrated in FIGS. 5 and 6, the opening 18 of the slot 14 has an expanded portion 18a whose width is increased according to the bending direction D1, D2 in which the coil end portion 23 protruding from the second end surface 16 is bent. The insulating paper 30 is accommodated in the expanded portion 18a with a part of the insulating paper 30 overlapping twice or more. That is, in step S100, the insulating paper 30 is accommodated in the expanded portion 18a with a part of the insulating paper 30 overlapping twice or more.

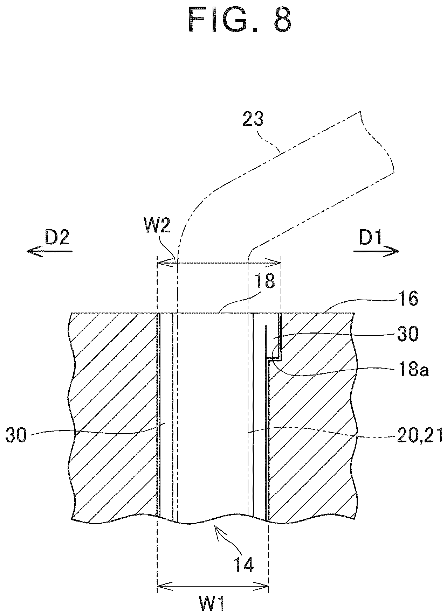

In the description of FIGS. 5 and 6, the width refers to the width in a direction that intersects the radial direction, and may be understood simply as the width in the circumferential direction. A width W1 of a portion of the slot 14 that does not correspond to the expanded portion 18a basically substantially corresponds to the width of the lead portion 21 plus twice the thickness of the insulating paper 30. A width W2 of the opening 18 including the expanded portion 18a is larger than the width W1, and is large enough to accommodate the insulating paper 30 overlapping twice or more on the outside of the lead portion 21. The phrase "twice or more" refers to three times, four times, or more. In the examples in FIG. 6 and FIG. 8 described later, the insulating paper 30 accommodated in the expanded portion 18a overlaps twice.

In the expanded portion 18a, it is only necessary that the insulating paper 30 should overlap twice or more, and therefore, pieces of the insulating paper 30 cut away from each other may overlap each other, for example. As another example, the insulating paper 30 may be accommodated in the expanded portion 18a with the end portion folded. In FIG. 6, the insulating paper 30 is caused to overlap twice by folding the end portion of the insulating paper 30 on the opening 18 side to the outer side, and this folded portion is accommodated in the expanded portion 18a.

With this configuration and method, the stress acting on the stator core 11, particularly on the corner of the opening 18, when bending the coil end portion 23 in step S120 is reduced by the insulating paper 30 accommodated in the expanded portion 18a in a state of overlapping twice or more. That is, the cushioning provided by the insulating paper 30 in a state of overlapping twice or more reduces the stress transmitted from the segment coil 20 to the stator core 11 when the coil end portion 23 is bent. As a result, partial damage to the stator core 11 and an energy loss in the motor are suppressed.

As described with reference to FIG. 5, each segment coil 20 inserted into the slot 14 has the coil end portion 23 bent in the bending direction D1 or bent in the bending direction D2. Therefore, the expanded portion 18a is formed on both the bending direction D1 side and the bending direction D2 side.

As illustrated in FIG. 5, the expanded portion 18a is formed continuously within the range in which a predetermined number of segment coils 20 are arranged within the slot 14. More specifically, the expanded portion 18a is formed continuously along the radial direction over the range in which the segment coils 20 are arranged within the slot 14 on both the bending direction D1 side and the bending direction D2 side. In addition, the insulating paper 30 is accommodated in the expanded portion 18a in a state of overlapping twice or more over the range in which the segment coils 20 are arranged within the slot 14 on both the bending direction D1 side and the bending direction D2 side. This configuration facilitates the work of forming the opening 18 with the expanded portion 18a in the stator core 11 and accommodating the insulating paper 30 in the expanded portion 18a in a state of overlapping twice or more.

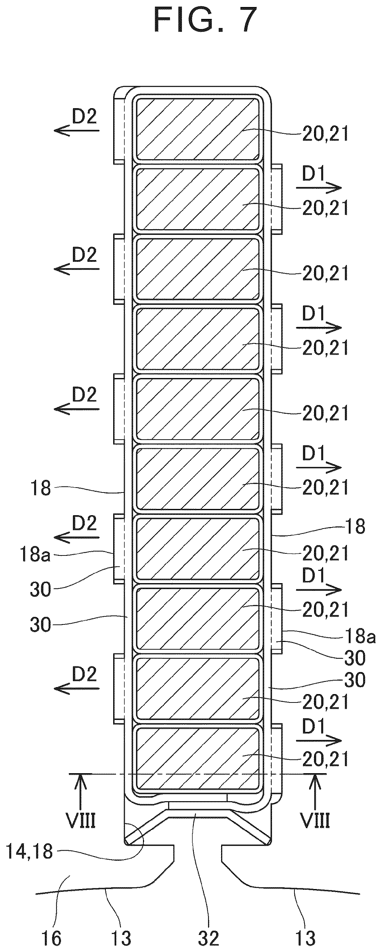

FIG. 7 illustrates the slot 14 and the like from the same viewpoint as FIG. 5 in order to explain the expanded portion 18a according to an example different from FIGS. 5 and 6. FIG. 8 illustrates a cross section taken along the line VIII-VIII in FIG. 7, similar to FIG. 6. Regarding FIGS. 7 and 8, descriptions common to those regarding FIGS. 5 and 6 will be omitted.

As illustrated in FIGS. 7 and 8, the expanded portion 18a is formed in a one-to-one correspondence with each of the segment coils 20 and spaced apart from each other within the range in which a predetermined number of segment coils 20 are arranged within the slot 14. That is, the expanded portion 18a may be formed only on the bending direction D1 side (see FIG. 8) in correspondence with the segment coil 20 (lead portion 21) whose coil end portion 23 is bent in the bending direction D1, and may be formed only on the bending direction D2 side in correspondence with the segment coil 20 (lead portion 21) whose coil end portion 23 is bent in the bending direction D2. In the example in FIG. 7, five expanded portions 18a are formed on the bending direction D1 side and spaced apart from each other in the radial direction in a one-to-one correspondence with five segment coils 20 (lead portions 21) whose coil end portions 23 are bent in the bending direction D1. In the example in FIG. 7, in addition, five expanded portions 18a are formed on the bending direction D2 side and spaced apart from each other in the radial direction in a one-to-one correspondence with five segment coils 20 (lead portions 21) whose coil end portions 23 are bent in the bending direction D2.

The insulating paper 30 is accommodated in a state of overlapping twice or more in each of the expanded portions 18a formed at a distance from each other. Also in FIG. 8, as in FIG. 6, the width W2 of the opening 18 including the expanded portion 18a is larger than the width W1. However, the width W2 indicated in FIG. 8 includes the expanded portion 18a formed only on the bending direction D1 side of the coil end portion 23, and therefore is smaller than the width W2 indicated in FIG. 6. According to the configuration illustrated in FIGS. 7 and 8, the expanded portion 18a is formed only at positions where it is necessary to reduce the stress transmitted from the segment coil 20 to the stator core 11 when bending the coil end portion 23. Therefore, the amount by which the stator core 11 is cut out by forming the expanded portion 18a can be minimized.

While specific examples of the technology disclosed herein have been described in detail above, these are merely exemplary and do not limit the scope of the claims. The technology described in the claims includes various modifications and alterations of the specific examples indicated above. The technical elements described herein or illustrated in the drawings exhibit technical utility alone or in various combinations, and are not limited to the combinations described in the claims as originally filed. The technology described herein or illustrated in the drawings can achieve a plurality of objects at the same time, and achieving one of the objects itself has technical utility.

## Claims

1. A stator (10) comprising:
a stator core (11) with a slot (14);
a coil (12) attached to the stator core (11) with a part of the coil put into the slot (14); and
insulating paper (30), put into the slot (14) and configured to insulate the stator core (11) from the coil (12), wherein:
an opening (18) of the slot (14) in an end surface of the stator core (11) that faces an axial direction includes an expanded portion (18a) whose width is increased in a direction in which a coil end portion of the coil (12) that protrudes from the end surface is bent; and
the insulating paper (30) is accommodated in the expanded portion (18a) with a part of the accommodated insulating paper overlapping twice or more.

2. The stator (10) according to claim 1, wherein an end portion of the insulating paper (30) is accommodated in the expanded portion (18a) with the accommodated end portion folded.

3. The stator (10) according to claim 1 or 2, wherein:
the coil (12) is a plurality of segment coils (20) that is connected to each other;
the slot (14) is provided to extend in a radial direction of the stator core (11);
a predetermined number of segment coils (20) are put into the slot (14) as arranged along the radial direction; and
the coil end portion of each of the segment coils (20) is bent in a direction that intersects the radial direction.

4. The stator (10) according to claim 3, wherein the expanded portion (18a) is provided continuously within a range in which the predetermined number of segment coils (20) are arranged.

5. The stator (10) according to claim 3, wherein the expanded portion (18a) is provided in a one-to-one correspondence with each of the segment coils (20) and spaced apart from each other within a range in which the predetermined number of segment coils (20) are arranged.

6. A method of assembling a stator (10), comprising:
putting insulating paper (30) into a slot (14) provided in a stator core (11), the slot (14) including an opening (18) in an end surface of the stator core (11) that faces an axial direction, the opening (18) including an expanded portion (18a) whose width is increased in a first direction, and the insulating paper (30) being accommodated in the expanded portion (18a) with a part of the accommodated insulating paper overlapping twice or more;
putting a part of a coil (12) into the slot (14) and inside the insulating paper (30); and
bending a coil end portion of the coil (12) that protrudes from the end surface, the first direction being a direction in which the coil end portion is bent.
